# EUROPÄISCHE PATENTANMELDUNG

(11) **EP 1 608 056 A2**
(43) Veröffentlichungstag der Anmeldung: **21.12.2005**
(21) Anmeldenummer: 05012276.1
(22) Anmeldetag: 08.06.2005
(51) Int. Cl.: H02P 1/26, H02P 1/40

(54) **Verfahren zur Messung des Lastzustandes eines Einphasen-Wechselstrommotors**

(30) Priorität: 17.06.2004 DE 102004029118
(71) Anmelder: Bontronic Steuerungstechnik GmbH, 53859 Niederkassel (DE)
(72) Erfinder: Klüppel, Heinz Eugen, 53859 Niederkassel-Lülsdorf (DE)
(74) Vertreter: Müller-Gerbes Wagner Albiger Patentanwälte

(57) **Zusammenfassung**

Die Erfindung bezieht sich auf ein Verfahren zur Messung des Lastzustandes eines Einphasen-Wechselstrommotors, der an einem Wechselstromnetz betrieben wird, wobei zwischen zwei Phasen des Motors ein Kondensator zur Erzeugung eines wahlweisen Rechts- und Linkslaufes des Motors geschaltet ist, bei dem die am Kondensator anliegende Spannung abgegriffen und als Messgröße für den Lastzustand des Motors verwendet wird.

## Beschreibung

Die Erfindung betrifft ein Verfahren zur Messung des Lastzustandes eines Einphasen-Wechselstrommotors, der an einem Wechselstromnetz betrieben wird, wobei zwischen zwei Phasen des Motors ein Kondensator zur Erzeugung eines wahlweisen Rechts- und Linkslaufes des Motors geschaltet ist.

Derartige Einphasen-Wechselstrommotoren finden beispielsweise als Stellantriebe für Absperrschieber Verwendung und zeichnen sich dadurch aus, dass weitgehend unabhängig vom jeweiligen Lastzustand, d. h. insbesondere dem erzeugten Drehmoment und der anliegenden Drehzahl, durch diesen Motor ein nahezu konstanter Strom fließt. Diese an sich vorteilhafte Eigenschaft macht es jedoch unmöglich, den Lastzustand des Motors durch Messung des Motorenstroms zu überwachen, wie es beispielsweise für Blockierschutzaufgaben eines solchen Motors wünschenswert wäre. Wird nämlich ein solcher Einphasen-Wechselstrommotor beispielsweise als Stellantrieb für einen Absperrschieber verwendet, tritt häufig das Problem auf, dass der vom Einphasen-Wechselstrommotor zu betätigende Absperrschieber infolge längerer Nichtbenutzung blockiert ist und somit der Stellmotor überlastet wird. Es ist von daher bislang erforderlich gewesen, den Lastzustand des als Stellantrieb verwendeten einphasigen Wechselstrommotors mit sehr aufwendigen Verfahren zu überwachen.

Aufgabe der Erfindung ist es, ein Verfahren zur Messung des Lastzustandes eines derartigen Einphasen-Wechselstrommotors vorzuschlagen, welches bedeutend einfacher durchzuführen ist und dennoch eine zuverlässige Ermittlung des Lastzustandes ermöglicht, um beispielsweise einen Motorschutzschalter zuverlässig ansteuern zu können.

Als einphasiger Wechselstrommotor im Sinne der Erfindung werden hierbei auch Drehstrommotoren mit einbezogen, die unter Einschaltung eines Kondensators am üblichen Wechselstromnetz betrieben werden.

Die erfindungsgemäße Lösung der gestellten Aufgabe besteht darin, dass an dem für die Erzeugung eines wahlweisen Rechts- und Linkslaufes in die Schaltung eingebrachten Kondensator die dort anliegende Spannung abgegriffen und als Messgröße für den Lastzustand des Motors verwendet wird. Es hat sich im Rahmen der Erfindung gezeigt, dass die am Kondensator abgegriffene Spannung in Abhängigkeit vom Lastzustand des Motors, nämlich anliegendem Drehmoment und/oder Motordrehzahl entsprechenden Änderungen unterworfen ist, die für die Messung des Lastzustandes herangezogen werden können.

Vorteilhafte Ausgestaltungen und Weiterbildungen des erfindungsgemäßen Verfahrens sind Gegenstand der Unteransprüche.

Bevorzugt wird die am Kondensator abgegriffene Spannung mit einer konstanten Referenzspannung verglichen und die Differenz zwischen abgegriffener Spannung und Referenzspannung gebildet. Es versteht sich, dass dieser Vergleich der abgegriffenen Spannung und der Referenzspannung sowie der Differenzbildung sowohl in aufeinanderfolgenden Abständen wie auch kontinuierlich erfolgen kann, wobei im Sinne einer stetigen Überwachung des Lastzustandes z. B. für Motorschutzaufgaben ein kontinuierlicher Vergleich der abgegriffenen Spannung mit der Referenzspannung und die Differenzwertbildung zwischen abgegriffener Spannung und Referenzspannung bevorzugt ist.

Aufgrund dieser Vergleichsergebnisse und der gebildeten Differenz kann bei Überschreiten eines vorbestimmbaren Grenzwertes der Differenz zwischen abgegriffener Spannung und Referenzspannung z. B. ein Alarm ausgelöst werden oder auch ein Motorschutzschalter für den Motor geöffnet werden, der den Motor vom Wechselstromnetz trennt und einer Beschädigung des Motors bzw. der Last vorbeugt. Ein solcher Fall kann beispielsweise bei einem für Absperrschieber eingesetzten Stellantrieb eintreten, wenn der Absperrschieber blockiert ist.

Um einen Vergleich der abgegriffenen Spannung und der Referenzspannung auf einfache Weise zu ermöglichen, werden die abgegriffene Spannung und die Referenzspannung bevorzugt mittels Gleichrichtern in Gleichspannungen umgewandelt und nachfolgend miteinander verglichen und der Differenzwert zwischen ihnen gebildet. Die Gleichrichter werden durch Transformatoren gespeist.

Die für den Vergleich mit der abgegriffenen Spannung eingesetzte Referenzspannung kann darüber hinaus mittels eines Transformators auch auf einen höheren Spannungswert transformiert werden, um z. B. im Leerlauf des zu messenden Einphasen-Wechselstrommotors gleiche Werte wie die abgegriffene Spannung aufzuweisen.

Als Referenzspannung kann bevorzugt die Netzspannung verwendet werden.

Das erfindungsgemäße Verfahren wird nachfolgend in weiteren Einzelheiten anhand einer schematischen Zeichnung dargestellt, die ein Blockschaubild eines an ein Wechselstromnetz angeschlossenen einphasigen Wechselstrommotors M zeigt.

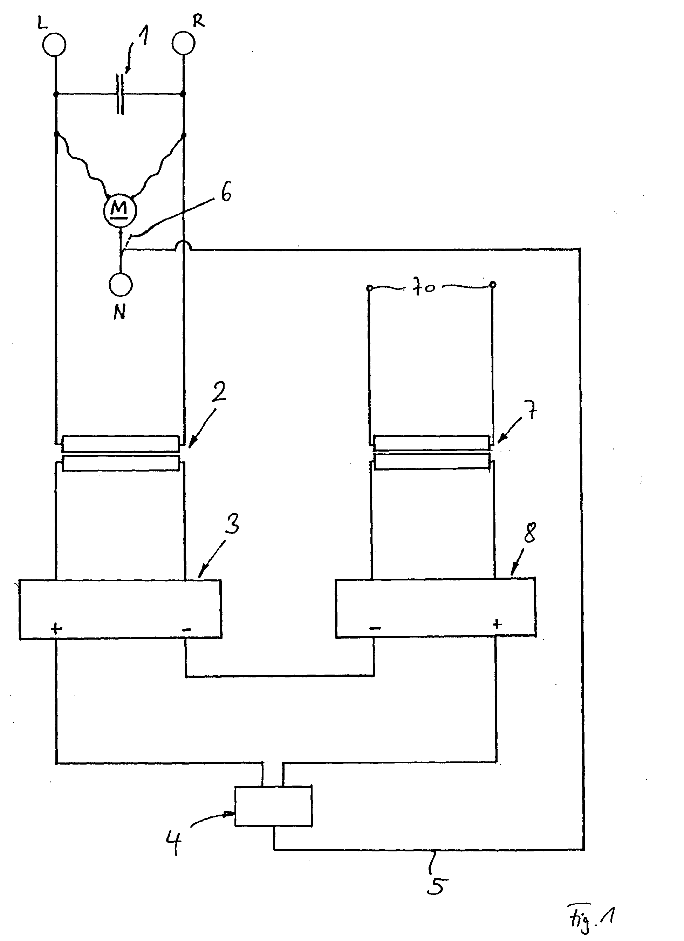

Wie aus dieser Figur 1 ersichtlich, ist der Einphasen-Wechselstrommotor M einerseits an den Nullleiter N angeschlossen, andererseits zur Erzeugung wahlweise eines Rechts- oder Linkslaufes auch an zwei Phasen L und R, wobei in an sich bekannter Weise zwischen diesen beiden Phasen L und R ein Kondensator 1 geschaltet ist.

Um den Einphasen-Wechselstrommotor M im Falle einer Überlastung z. B. bei Blockierung des von diesem angetriebenen Organs vom Netz zu trennen, ist ein Motorschutzschalter 6 vorgesehen, der bei entsprechender Beaufschlagung einer Signalleitung 5 öffenbar ist, um den Anschluss an das Wechselstromnetz zu trennen.

Die in der Figur 1 dargestellte Schaltung dient der kontinuierlichen Messung des Lastzustandes des Einphasen-Wechselstrommotors M, wobei unter Lastzustand hierbei sowohl das vom Einphasen-Wechselstrommotor M erzeugte Drehmoment wie auch dessen Drehzahl bezeichnet werden.

Für die gewünschte Überwachung wird die am Kondensator 1 anliegende Spannung abgegriffen und in einem motorseitigen Transformator 2 auf eine Gleichspannung gleichgerichtet, die sodann im mit Bezugsziffer 3 gekennzeichneten Block anliegt.

In gleicher Weise wird eine beispielsweise von der Netzspannung gebildete Referenzspannung an den beiden Anschlüssen 70 auf eine Referenzschaltung gegeben und mittels eines netzseitigen Transformators 7 mit nachgeschaltetem Gleichrichter 8 zu einem Gleichstrom gleichgerichtet und zum anderen auf einen höheren Spannungswert transformiert, der sodann am Block 8 anliegt und größenmäßig in etwa der am Block 3 auf der Motorseite entsprechenden Spannung entspricht.

Beispielsweise wird im Leerlauf des einphasigen Wechselstrommotors eine Spannung von 400 V am Kondensator gemessen, die nach Gleichrichtung in gleicher Höhe, d. h. als 400 V-Gleichspannung am Block mit Bezugsziffer 3 anliegt. Dementsprechend wird die auf die Anschlüsse 70 als Referenzspannung aufgegebene Netzspannung mittels des Transformators 7 auf ebenfalls 400 V hochtransformiert und gleichgerichtet, so dass im Block 8 ebenfalls 400 V-Gleichspannung anliegen.

Mit steigender Motorenbelastung des einphasigen Wechselstrommotors M sinkt nunmehr die am Block 3 anliegende Spannung ab und beträgt beispielsweise bei 400 V im Leerlauf bei Blockieren des einphasigen Wechselstrommotors M lediglich noch 330 V.

Die an den Blöcken 3 und 8 anliegenden Spannungen werden kontinuierlich einer Komparatorschaltung 4 zugeführt, in welcher sie miteinander verglichen werden und kontinuierlich ein Differenzwert gebildet wird, der dementsprechend je nach Lastzustand des Einphasen-Wechselstrommotors M zwischen 0 V bei Leerlauf des Einphasen-Wechselstrommotors M bis hin zu 70 V bei Blockieren desselben liegt. Die hier beispielhaft angegebenen Werte 400 V und 70 V können je nach Motortyp stark schwanken.

Die Komparatorschaltung 4 ist nunmehr so ausgebildet, dass bei Überschreiten eines vorbestimmbaren Grenzwertes ein entsprechendes Signal auf die Steuerleitung 5 gelegt wird und eine Öffnung des Motorschutzschalters 6 bewirkt, so dass ein zuverlässiger Blockierschutz des Einphasen-Wechselstrommotors gegeben ist.

Es versteht sich, dass das vorangehend erläuterte Verfahren auch für vielfältige andere Anwendungsbereiche, in denen es auf die Messung bzw. Überwachung des Lastzustandes eines solchermaßen betriebenen Einphasen-Wechselstrommotors ankommt, Verwendung finden kann.

## Patentansprüche

1. Verfahren zur Messung des Lastzustandes eines Einphasen-Wechselstrommotors (M), der an einem Wechselstromnetz betrieben wird, wobei zwischen zwei Phasen (L, R) des Motors ein Kondensator (1) zur Erzeugung eines wahlweisen Rechts- und Linkslaufes des Motors (M) geschaltet ist, **dadurch gekennzeichnet, dass** die am Kondensator (1) anliegende Spannung abgegriffen und als Messgröße für den Lastzustand des Motors (M) verwendet wird.

2. Verfahren nach Anspruch 1, **dadurch gekennzeichnet, dass** die am Kondensator (1) abgegriffene Spannung mit einer konstanten Referenzspannung verglichen wird und die Differenz zwischen abgegriffener Spannung und Referenzspannung gebildet wird.

3. Verfahren nach Anspruch 2, **dadurch gekennzeichnet, dass** bei Überschreiten eines vorbestimmbaren Grenzwertes der Differenz zwischen abgegriffener Spannung und Referenzspannung ein Motorschutzschalter (6) für den Motor (M) geöffnet wird.

4. Verfahren nach einem der Ansprüche 2 oder 3, **dadurch gekennzeichnet, dass** die abgegriffene Spannung und die Referenzspannung mittels Gleichrichtern in Gleichspannungen umgewandelt werden, die miteinander unter Differenzbildung verglichen werden.

5. Verfahren nach Anspruch 4, **dadurch gekennzeichnet, dass** die Referenzspannung mittels eines Transformators 7 auf höhere Spannungswerte hochtransformiert und gleichgerichtet wird.

6. Verfahren nach einem der Ansprüche 2 bis 5, **dadurch gekennzeichnet, dass** als Referenzspannung die Netzspannung des Wechselstromnetzes verwendet wird.

7. Verfahren nach einem der Ansprüche 1 bis 6, **dadurch gekennzeichnet, dass** die Differenzspannung als Maß für das Drehmoment und die Drehzahl genommen wird und sowohl das Drehmoment als auch die Drehzahl mittels Analog- oder Digitalmessgeräten, die entsprechend kalibriert werden, angezeigt werden.
